# EUROPÄISCHE PATENTSCHRIFT

(11) **EP 3 865 023 B1**
(45) Veröffentlichungstag und Bekanntmachung des Hinweises auf die Patenterteilung: **15.06.2022**
(21) Anmeldenummer: 21153951.5
(22) Anmeldetag: 28.01.2021
(51) Int. Cl.: A47J 31/60

(54) **GETRÄNKEBEREITER MIT VERLÄNGERTER LEBENSDAUER DER FILTEREINHEIT**
BEVERAGE MAKER WITH EXTENDED SERVICE LIFE OF THE FILTER UNIT
DISPOSITIF DE PRÉPARATION DE BOISSONS À DURÉE PROLONGÉE DE VIE DU FILTRE

(30) Priorität: 13.02.2020 DE 102020201824
(43) Veröffentlichungstag der Anmeldung: 18.08.2021
(73) Patentinhaber: WMF GmbH, 73312 Geislingen/Steige (DE)
(72) Erfinder: Göltenboth, Frank, 89250 Senden (DE); Gussmann, Jochen, 73527 Schwäbisch-Gmünd (DE); Startz, Armin, 89197 Weidenstetten (DE)
(74) Vertreter: Pfenning, Meinig & Partner mbB

(56) Entgegenhaltungen:
- WO-A1-2015/090366
- WO-A1-2018/083498
- WO-A1-2018/153657
- WO-A1-2018/234241
- DE-A1-102010 003 636

## Beschreibung

Die vorliegende Erfindung betrifft einen Getränkebereiter, der eine Filtereinheit zur Wasserenthärtung aufweist, wobei in Abhängigkeit von dem zuzubereitenden Getränk oder einer anderen anzuwählenden Funktion, z.B. der Reinigung des Getränkebereiters, enthärtetes Wasser mit Leitungswasser gemischt werden kann, wodurch die Lebensdauer der Filtereinheit verlängert werden kann.

Aufgrund der Tatsache, dass die Wasserhärte regional stark unterschiedlich ist und somit durch die örtlichen Wasserversorger oft kalkhaltiges Wasser zur Verfügung gestellt wird, ist eine Enthärtung des Wassers häufig zwingend. Um ein Verkalken der Heißwassererzeuger, wie Heißwasserboiler, Dampfkessel, Durchlauferhitzer, Wärmetauscher und der Leitungssysteme, Ventile, Pumpen zu verhindern, ist den Maschinen daher oft eine Filtereinheit zur Enthärtung vorgeschaltet. Bei diesen Filtereinheiten handelt es sich vorwiegend um lonentauscher bestehend aus einer Filterkartusche mit einem lonentauscherharz, welches Calcium- und Magnesium-Ionen gegen Natrium- oder KaliumIonen austauscht. Die Kartusche ist in einen sogenannten Filterkopf eingeschraubt. In diesem wird das Zulaufwasser in den Filter geleitet und das gefilterte Wasser abgeleitet. Weiterhin befindet sich dort eine sogenannte Verschneideeinrichtung mit der unbehandeltes Wasser dem gefilterten Wasser zugemischt werden kann, um die gewünschte Wasserhärte am Ausgang zu erreichen. Die Menge des zugemischten Wassers kann manuell bei der Inbetriebnahme eingestellt werden. Dies ist notwendig, da entkalktes Wasser benötigt wird, um ein Verkalken der Bauteile zu verhindern. Bei zu starker Absenkung der Wasserhärte kann aber der Kaffeegeschmack, das Aroma und die typische dunkle Kaffeefarbe stark nachlassen. Zusätzlich wird das Wasser aggressiv und kann zu einer Demineralisierung und damit Korrosion der metallischen Bauteile führen.

Für einen vertretbaren Kompromiss zwischen Verkalkung und Kaffeegeschmack hat sich in der Praxis eine Enthärtung bis zu einer Wasserhärte von 5° bis 6° dKH (Karbonathärte) bewährt. Hiermit wird ein guter Kaffeegeschmack sichergestellt und die Zyklen, in denen eine aktive Enthärtung des Systems mit Enthärtungsmittel durch den Kunden bzw. Servicetechniker durchgeführt werden muss, halten sich in einem vertretbaren Rahmen.

WO 2018/083498 A1 beschreibt ein Filtrationssystem in einem Getränkebereiter, das aus einem ersten Filter zum Austausch von Carbonat-Ionen und einem zweiten Filter zum Austausch von Calcium oder Magnesium-Ionen besteht. Während der erste Filter nur vor den Heißwasserboiler geschaltet wird, wird vor den Dampfboiler sowohl der erste als auch der zweite Filter geschaltet. Hierdurch wird erreicht, dass der Mineralgehalt für die Erzeugung von Milchschaum, die sich an Dampfboiler anschließt, reduziert wird. Zum Kochen des Kaffees wird aus geschmacklichen Gründen hingegen auf die Reduzierung des Mineralgehalts verzichtet.

Aus der WO 2018/153657 A1 ist eine Wasserenthärtungsvorrichtung bekannt, die einen Filter mit einem lonenaustauschermaterial enthält, wobei das lonenaustauschermaterial so modifiziert ist, dass eine genauere Bestimmung des Erschöpfungszustands damit eine bessere Ausnutzung der Kapazität des Ionenaustauschers ermöglicht.

Der Nachteil derartiger Filtereinheiten liegt in den erhöhten Betriebskosten für den Getränkebereiter. Je stärker das Wasser enthärtet wird, umso höher fallen die Betriebskosten aus. Erfolgt die Enthärtung nicht ausreichend, findet eine stärkere Verkalkung des Getränkebereiters statt, was ebenfalls zu erhöhten Betriebskosten und Stillstandszeiten aufgrund der häufiger durchzuführenden Entkalkungen des Getränkebereiters führen kann.

Es war daher Aufgabe der vorliegenden Erfindung, die Filterreichweite zu verlängern und damit die Betriebskosten zu reduzieren, ohne Einbußen bei Kaffeegeschmack oder Erhöhung der Entkalkungszyklen hinnehmen zu müssen.

Diese Aufgabe wird durch den Getränkebereiter mit den Merkmalen des Anspruchs 1 und das Verfahren zur Einstellung variierender Wasserhärten in einem Getränkebereiter mit den Merkmalen des Anspruchs 12 gelöst. Die weiteren abhängigen Ansprüche stellen vorteilhafte Weiterbildungen dar. In Anspruch 14 werden erfindungsgemäße Verwendungen beschrieben.

Erfindungsgemäß wird ein Getränkebereiter bereitgestellt, der folgende Komponenten enthält:
- einen mit dem Trinkwassernetz oder einem Wassertank verbindbaren Wasserzulauf,
- einen vom Wasserzulauf in den Getränkebereiter verlaufenden ersten Wasserpfad,
- einen vom ersten Wasserpfad abzweigenden zweiten Wasserpfad, wobei das Wasser aus dem ersten Wasserpfad und das Wasser aus dem zweiten Wasserpfad über eine Zusammenführung in einen dritten Wasserpfad zur Vermischung des Wassers überführbar sind,
- mindestens eine im ersten Wasserpfad angeordnete Filtereinheit zur Wasserenthärtung,
- mindestens eine Heizeinrichtung zum Erhitzen von Wasser, die im dritten Wasserpfad angeordnet ist,
- mindestens einem im ersten und/oder zweiten Wasserpfad angeordneten Durchflussregler,
- mindestens einem im ersten und/oder zweiten und/oder dritten Wasserpfad angeordneten Durchflussmesser und
- mindestens eine Steuereinheit zur Einstellung des Mischungsverhältnisses des Wassers im dritten Wasserpfad.

Die Erfindung beruht dabei auf der Erkenntnis, dass die Ausfällung von Kalk in einem Getränkebereiter stark von der Temperatur abhängig ist, d.h. je höher die Temperatur desto stärker tritt eine Verkalkung ein. Dies hat am Beispiel eines Getränkebereiters die Folge, dass ein Dampfkessel, in dem etwa 120°C herrschen, eine stärkere Verkalkung als in einem Heißwasserboiler für das Brühwasser (92 bis 98°C) oder das Teewasser (70 bis 92°C) auftritt. Bei anderen Vorgängen in dem Getränkebereiter, wie z.B. einem Spülvorgang des Milchsystems wird gar kaltes Wasser eingesetzt, um ein Verkleben der in der Milch enthaltenen Eiweiße zu vermeiden, mit der Konsequenz, dass hier eine noch viele geringere Verkalkung auftritt.

Die erfindungsgemäße Lösung beruht darauf, dass das Verschneiden von gefiltertem Wasser mit Rohwasser auf eine fest eingestellte Wasserhärte nicht extern am Wasserfilter stattfindet, sondern das Rohwasser und enthärtetem Wasser werden über 2 getrennte Leitungen der Kaffeemaschine zugeführt. Mittels Leitwertmessung von Rohwasser und enthärtetem Wasser und Differenzbildung kann die Wirksamkeit des Filters gemessen und dessen Erschöpfung detektiert werden. Über Durchflussregler im ersten und/oder zweiten Wasserpfad kann somit Wasser mit beliebig einstellbaren Härtegraden bereitgestellt werden. Somit ist es möglich, stark oder komplett enthärtetes Wasser dem Dampfkessel zuzuführen. Für den Heißwasserboiler kann hingegen Wasser mit z.B. etwa 5°dkH eingesetzt werden, während für Spülvorgänge des Milchsystems oder bei Reinigungsvorgänge mit einem Reinigungsmittel nichtenthärtetes Rohwasser verwendet wird.

Da somit nur stark enthärtetes Wasser beim Dampfkessel benutzt wird und aufgrund der Tatsache, dass Dampf ein vielfach höheres Volumen als ein Fluid aufweist, werden erfindungsgemäß nur geringe Mengen des aufbereiteten, d.h. im Filter enthärteten, Wassers benötigt. Bei den anderen Verbrauchern (z.B. Heißwasserboiler, Milchsystem) kann entsprechend der Temperatur mehr oder weniger Rohwasser zu gemischt werden. Dies reduziert die Wassermengen, die enthärtet werden müssen, erheblich. Da über die Differenzleitwertmessung die Erschöpfung des Filters erkannt und durch Anpassung der Verschneidung weiter verzögert werden kann, wird somit eine Nutzung bis zur kompletten Erschöpfung ermöglicht.

Der erfindungsgemäße Ansatz bringt wesentliche Vorteile für das Betreiben eines Getränkebereiters mit sich:
- es kann eine deutlich längere Filterreichweite sichergestellt werden, was einen positiven Effekt auf die Betriebskosten des Getränkebereiters hat
- der erfindungsgemäße Aufbau ist weniger komplex als Systeme aus dem Stand der Technik, da z.B. auf Verschneideeinrichtungen verzichtet werden kann
- das erfindungsgemäße System erlaubt die Verwendung einfacher Filtersysteme, was zu einer weiteren Reduktion der Betriebskosten führt
- die Wasserhärte kann entsprechend der Zubereitungstemperatur und der Kalkempfindlichkeit des Vorgangs eingestellt werden
- es kann eine stabile Wasserhärte auch bei Härte-Schwankungen im Rohwasser sichergestellt werden
- die Erschöpfung des Filters kann mit einfachen Maßnahmen festgestellt werden
- da für den Dampfkessel stärker entkalktes Wasser verwenden wird, da es ja keine Auswirkung auf den Kaffeegeschmack gibt, verlängern sich auch die Zyklen für die Entkalkung durch den Kunden oder Servicetechniker
- es kann in der Brüheinheit für verschiedene Kaffeegetränke gezielt der gewünschte Härtegrad eingestellt werden, z.B. sind für einen Cafe crema und einen Espresso häufig unterschiedliche Härtegrade des Wassers aufgrund der unterschiedlichen Wassermenge sowie Geschmacksanforderung gewünscht

Es ist bevorzugt, dass die Filtereinheit zur Wasserenthärtung mindestens eine Filterkartusche enthält oder hieraus besteht, wobei die Filterkartusche bevorzugt Aktivkohle, einen Anionentauscher, einen Kationentauscher oder Kombinationen hiervon und ggf. eine Mineralstoffquelle zur Freisetzung von Mineralstoffen im Wasser enthält. Aktivkohle dient hierbei der Filterung von partikulären und organischen Verunreinigungen aber auch für Chlorid-Verunreinigungen. Als Anionentauscher sind Materialien einsetzbar, die das Carbonat-Ionen im Wasser durch Hydroxid-Ionen, als Kationentauscher solche, die die Magnesium- und Calcium-Ionen gegen Natrium- oder KaliumIonen austauschen. Ebenso kann ein Umkehrosmosefilter verwendet werden.

Eine weitere bevorzugte Ausführungsform sieht vor, dass die Filtereinheit zur Wasserenthärtung keine Mischeinrichtung zur Vermischung von gefiltertem Wasser mit unbehandeltem Wasser, auch bekannt als Verschneideeinrichtung, aufweist.

Der Getränkebereiter weist vorzugsweise mindestens eine Fördereinheit zum Fördern des Wassers, insbesondere eine Pumpe, auf.

Es ist bevorzugt, dass die mindestens eine Heizeinrichtung ausgewählt ist aus der Gruppe bestehend aus einem Heißwasserkessel, einem Dampfkessel, einem Durchlauferhitzer und Kombinationen hiervon.

Eine bevorzugte erfindungsgemäße Ausführungsform sieht dabei vor, dass die Heizeinrichtung ein Dampfkessel mit integriertem Durchlauferhitzer ist. Dabei wird im oberen Teil (Dampfbereich) des Kessels der Dampf erzeugt, der für die Milchschäumung benötigt wird. Im unteren Bereich des Kessels liegt der Heißwasserbereich. Der Durchlauferhitzer, der im Dampfbereich oder im Heißwasserbereich liegen kann, wird das Wasser für die Brühung des Kaffees erhitzt.

Eine andere bevorzugte erfindungsgemäße Ausführungsform sieht vor, dass der Getränkebereiter zwei getrennte Kessel aufweist, d.h. einen Dampfkessel und einen Heißwasserkessel.

Weiter ist es bevorzugt, dass der mindestens eine Durchflussregler ein Ventil, bevorzugt eine Proportionalventil, und/oder eine regelbare Blende ist.

Der mindestens eine Durchflussmesser ist bevorzugt ein berührungsloser Durchflussmesser, besonders bevorzugt ein Flügelrad-Durchflussmesser, ein Ultraschall-Durchflussmesser oder ein magnetisch-induktiver Durchflussmesser.

Vorzugsweise ist im ersten und/oder zweiten und/oder dritten Wasserpfad mindestens eine Leitwertmesseinheit, insbesondere ein Leitwertsensor angeordnet, wobei die mindestens eine Leitwertmesseinheit bevorzugt stromaufwärts von dem mindestens einen Durchflussregler angeordnet ist. Hierbei ist es bevorzugt, dass Leitwertmessungen im ersten und dritten Wasserpfad durchgeführt werden, womit die Erschöpfung der Filterkartusche bestimmt werden kann.

Eine bevorzugte Ausführungsform sieht vor, dass die mindestens eine Heizeinheit über mindestens einen weiteren Wasserpfad mit mindestens einer weiteren Einheit ausgewählt aus der Gruppe bestehend aus eine Brüheinheit zum Brühen von Kaffee, eine Mischeinheit zum Mischen von Wasser mit einem Feststoff oder Getränkekonzentrat, bevorzugt Kakao-, Milch- oder Suppenpulver, eine Milchschäumeinheit oder Kombinationen hiervon verbunden ist.

Vorzugsweise regelt die Steuereinheit das Mischungsverhältnis in Abhängigkeit von der angesteuerten mindestens einer weiteren Einheit.

Eine bevorzugte Ausführungsform sieht vor, dass vom Wasserpfad ein Bypass abzweigt, der eine unmittelbare Verbindung mit mindestens einer der weiteren Einheiten ausgewählt aus der Gruppe bestehend aus Milchschäumeinheit, Brüheinheit und Mischeinheit ermöglicht. Mit Hilfe des Bypasses kann die mindestens eine Heizeinrichtung umgangen werden. Dies bietet sich beispielsweise für Reinigungsschritte an, bei denen eine oder mehrere der weiteren Einheiten, d.h. Milchschäumeinheit, Brüheinheit und Mischeinheit, gereinigt werden sollen. Diese Bypassleitung kann analog zu den anderen Wasserpfaden entsprechende Elemente wie Durchflussregler oder Durchflussmesser enthalten.

Der Getränkebereiter ist bevorzugt eine elektrisch betriebene Kaffeemaschine.

Erfindungsgemäß wird auch ein Verfahren zur Einstellung variierender Wasserhärten in einem Getränkebereiter bereitgestellt, bei dem:
- ein Wasserzulauf mit dem Trinkwassernetz oder einem Wassertank verbunden wird,
- vom Wasserzulauf in den Getränkebereiter ein erster Wasserpfad verläuft,
- vom ersten Wasserpfad ein zweiter Wasserpfad abgezweigt wird, wobei das Wasser aus dem ersten Wasserpfad und das Wasser aus dem zweiten Wasserpfad über eine Zusammenführung in einen dritten Wasserpfad zur Vermischung des Wassers überführt werden,
- über mindestens eine im ersten Wasserpfad angeordnete Filtereinheit das Wasser im ersten Wasserpfad enthärtet wird,
- mindestens eine Heizeinrichtung zum Erhitzen von Wasser im dritten Wasserpfad angeordnet wird,
- mit mindestens einem im ersten und/oder zweiten Wasserpfad angeordneten Durchflussregler die Durchflussmenge an Wasser im ersten und/oder zweiten Wasserpfad eingestellt wird,
- mit mindestens einem im ersten und/oder zweiten und/oder dritten Wasserpfad angeordneten Durchflussmesser der Durchfluss im ersten und/oder zweiten und/oder dritten Wasserpfad bestimmt wird und
- mit mindestens einer Steuereinheit das Mischungsverhältnis des Wassers im dritten Wasserpfad eingestellt wird.

Es ist bevorzugt, dass bei dem erfindungsgemäßen Verfahren der zuvor beschriebene erfindungsgemäße Getränkebereiter eingesetzt wird.

Der erfindungsgemäße Getränkebereiter findet Verwendung zur Einstellung variierender Wasserhärten bei der Zubereitung von Getränken und bei der Reinigung des Getränkebereiters.

Anhand der nachfolgenden Figuren soll der erfindungsgemäße Gegenstand näher beschrieben werden, ohne diesen auf die hier gezeigten spezifischen Ausführungsformen einschränken zu wollen.
Fig. 1 zeigt eine schematische Darstellung des Aufbaus eines ersten erfindungsgemäßen Getränkebereiters.
Fig. 2 zeigt eine schematische Darstellung des Aufbaus eines zweiten erfindungsgemäßen Getränkebereiters.
Fig. 3 zeigt eine schematische Darstellung des Aufbaus eines dritten erfindungsgemäßen Getränkebereiters.
Fig. 4 zeigt den Wasserhärteverlauf bei einem Gentränkebereiter nach dem Stand der Technik
Fig. 5 zeigt den Wasserhärteverlauf bei einem erfindungsgemäßen Getränkebereiter

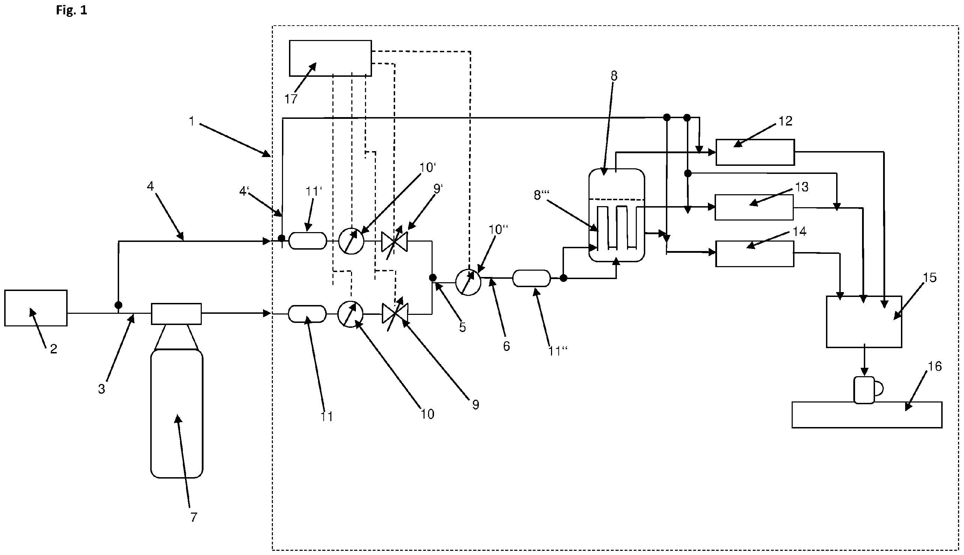

In Fig. 1 ist ein erfindungsgemäßer Getränkebereiter 1 dargestellt, der über einen Wasserzulauf 2 mit Wasser gespeist wird. Der Wasserzulauf 2 ist dabei über einen ersten Wasserpfad 3 mit dem Getränkebereiter verbunden, wobei eine Filtereinheit 7 zur Wasserenthärtung im ersten Wasserpfad 3 angeordnet ist. Vor der Filtereinheit 7 zweigt ein zweiter Wasserpfad 4 ab, der ebenfalls in den Getränkebereiter 1 führt und ungefiltertes Wasser in den Getränkebereiter leitet. Innerhalb des Getränkebereiters ist im ersten Wasserpfad 3 ein Leitwertsensor 11 und stromabwärts ein Durchflussmesser 10 und ein Durchflussregler 9 angeordnet. Im zweiten Wasserpfad 4 ist analog ein Leitwertsensor 11' vor einem Durchflussmesser 10' und einem Durchflussregler 9' angeordnet. Der erste Wasserpfad 3 und zweite Wasserpfad 4 münden über eine Zusammenführung 5 im dritten Wasserpfad 6. Im Wasserpfad 6 kann zusätzlich ein weiterer Durchflussmesser 10" und ein Leitwertsensor 11" angeordnet sein. Der dritte Wasserpfad 6 führt zu einer Heizeinrichtung 8, die im vorliegenden Fall aus einem einzigen Kessel besteht, der einen oberen Dampfbereich und einen unteren Heißwasserbereich aufweist. Weiterhin ist in dem Kessel ein Durchlauferhitzer 8'" integriert. Der im oberen Bereich des Kessels erzeugte Dampf wird dann einer Milchschäumeinheit 12 zugeführt. Der hier erzeugte Milchschaum wird dann über den Getränkeausgang 15 in die auf die Tropfschale 16 befindliche Tasse geleitet. Das aus dem Durchlauferhitzer 8'" tretende heiße Wasser wird zu einer Brüheinheit 13 zur Erzeugung von Kaffee geleitet. Dieser wird dann über den Getränkeausgang 15 in die Tasse gegeben. Aus dem unteren Bereich des Kessels wird heißes Wasser, gegebenenfalls gemischt mit kaltem Wasser in eine Mixereinheit 14, z. B. für die Zubereitung von Teewasser, geleitet. Dieses wird dann in Anschluss über den Getränkeausgang 15 in eine Tasse geleitet. Alternativ ist es möglich, dass über einen Bypass 4' Rohwasser unter Umgehung der Heizeinrichtung 8 unmittelbar zu einer der weiteren Einheiten, d.h. der Milchschäumeinheit 12, der Brüheinheit 13 und Mischeinheit 14 geleitet wird, was sich für Reinigungsschritte der besagten Einheiten anbietet.

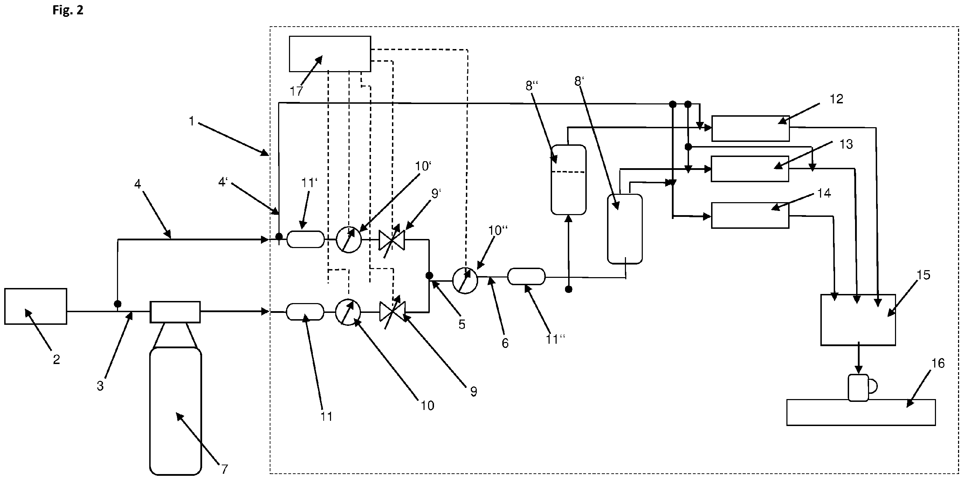

In Fig. 2 ist eine weitere Variante eines erfindungsgemäßen Getränkebereiters 1 dargestellt, der über einen Wasserzulauf 2 mit Wasser gespeist wird. Der Wasserzulauf 2 ist dabei über einen ersten Wasserpfad 3 mit dem Getränkebereiter verbunden, wobei eine Filtereinheit 7 zur Wasserenthärtung im ersten Wasserpfad 3 angeordnet ist. Vor der Filtereinheit 7 zweigt ein zweiter Wasserpfad 4 ab, der ebenfalls in den Getränkebereiter 1 führt und ungefiltertes Wasser in den Getränkebereiter leitet. Innerhalb des Getränkebereiters ist im ersten Wasserpfad 3 ein Leitwertsensor 11 und stromabwärts ein Durchflussmesser 10 und ein Durchflussregler 9 angeordnet. Im zweiten Wasserpfad 4 ist analog ein Leitwertsensor 11' vor einem Durchflussmesser 10' und einem Durchflussregler 9'angeordnet. Der erste Wasserpfad 3 und zweite Wasserpfad 4 münden über eine Zusammenführung 5 im dritten Wasserpfad 6. Wasserpfad 6 kann zusätzlich ein weiterer Durchflussmesser 10" angeordnet sein. Der dritte Wasserpfad 6 führt zu einem Heißwasserkessel 8' und einem Dampfkessel 8". Über den Dampfkessel 8" wird die Milchschäumeinheit 12 versorgt, während über den Heißwasserkessel 8' die Brüheinheit 13 und die Mixereinheit 14 versorgt wird. Der erzeugte Milchschaum wird dann über den Getränkeausgang 15 in die auf die Tropfschale 16 befindliche Tasse geleitet. Das aus dem Heißwasserkessel 8' tretende heiße Wasser wird zu einer Brüheinheit 13 zur Erzeugung von Kaffee geleitet. Dieser wird dann über den Getränkeausgang 15 in die Tasse gegeben. Ebenso kann heißes Wasser aus dem Heißwasserkessel 8', gegebenenfalls gemischt mit kaltem Wasser in eine Mixereinheit 14, z. B. für die Zubereitung von Teewasser, geleitet werden. Dieses wird dann in Anschluss über den Getränkeausgang 15 in eine Tasse geleitet. Auch hier ist als Alternative ein Bypass 4' dargestellt, über den Rohwasser unter Umgehung der Heizeinrichtung 8, 8', 8" unmittelbar zu einer der weiteren Einheiten, d.h. der Milchschäumeinheit 12, der Brüheinheit 13 und Mischeinheit 14, z.B. für Reinigungsschritte, geleitet wird.

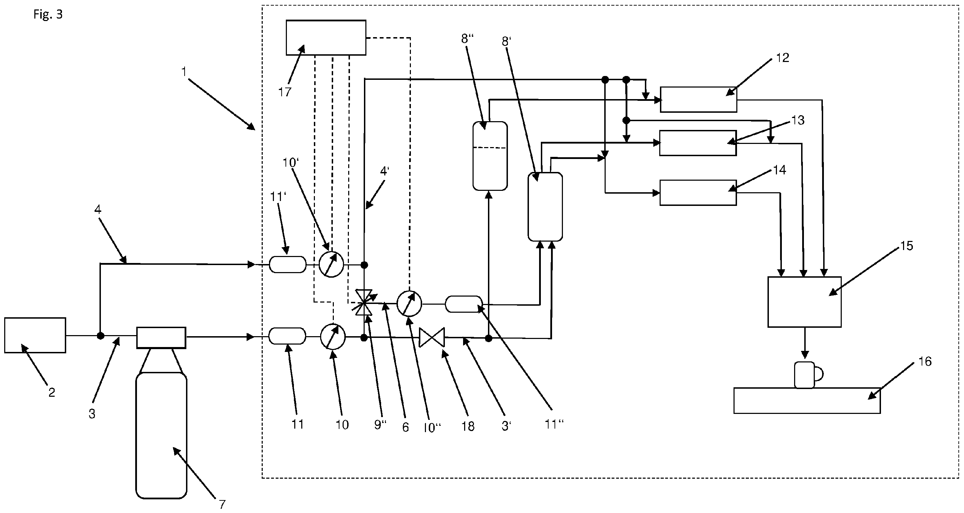

Fig. 3 zeigt weitere Varianten eines erfindungsgemäßen Getränkebereiters, die sich von der Variante nach Fig. 2 durch ein Dreiwegemischventil 9" unterscheidet. Auf diese Weise kann in der Filtereinrichtung 7 enthärtetes Wasser sowohl zu den Heizeinrichtungen 8'und 8", die auch Durchlauferhitzer sein können, geleitet werden. Auf Grund der Tatsache das vollständig enthärtetes, entmineralisiertes Wasser geeignet ist, leichte Verkalkungen zu lösen, kann über Ventil 18 der Heizeinrichtung 8', 8" zyklisch vollentsalztes Wasser zugeführt werden um eine Entkalkung, z.B. bei der täglichen Maschinenreinigung, zu erreichen. Die Anwendung kann bevorzugt bei Durchlauferhitzersystemen angewendet werden.

Ebenso kann in der Filtereinrichtung 7 enthärtetes Wasser über den Bypass 3'über die Heizeinrichtung 8', 8" zu den weiteren Einheiten wie Milchschäumeinheit 12, Brüheinheit 13 und Mischeinheit 14 geleitet werden.

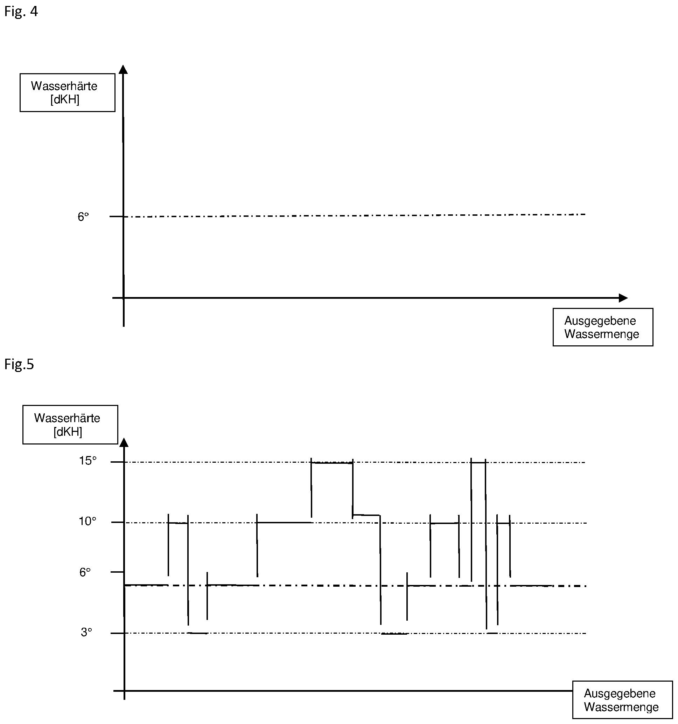

In Fig. 4 ist der Wasserhärteverlauf eines Getränkebereiters nach dem Stand der Technik dargestellt. Hier liegt eine konstante Wasserhärte von 6° dKH vor. Anhand der ausgegebenen Wassermenge werden die Verkalkung und der Entkalkungszyklus sowie die Erschöpfung des Filtersystems festgelegt.

In Fig. 5 ist der Wasserhärteverlauf eines erfindungsgemäßen Getränkebereiters dargestellt. Dabei können im Getränkebereiter beispielsweise folgende Werte für die verschiedenen Getränke festgelegt werden:
3° dKH für Dampfkessel / Dampfausgabe zum Milchschäumen 6° dKH für 125 ml Cafe Creme
10° dKH für 40 ml Espresso
15° dKH für 150 ml heiße Schokolade oder Teewasserausgabe

Die Fläche oberhalb der Kurve ist ein Maß für die Aufkalkung in der Maschine und die Reichweite des Filters bis zur Erschöpfung.

## Patentansprüche

1. Getränkebereiter (1) enthaltend
• mit dem Trinkwassernetz oder einem Wassertank verbindbaren Wasserzulauf (2),
• einen vom Wasserzulauf (2) in den Getränkebereiter (1) verlaufenden ersten Wasserpfad (3),
• einen vom ersten Wasserpfad (3) abzweigenden zweiten Wasserpfad (4), wobei das Wasser aus dem ersten Wasserpfad (3) und das Wasser aus dem zweiten Wasserpfad über eine Zusammenführung (5) in einen dritten Wasserpfad (6) zur Vermischung des Wassers überführbar sind,
• mindestens eine im ersten Wasserpfad (3) angeordnete Filtereinheit (7) zur Wasserenthärtung,
• mindestens eine Heizeinrichtung (8, 8') zum Erhitzen von Wasser, die im dritten Wasserpfad (6) angeordnet ist,
• mindestens einem im ersten und/oder zweiten Wasserpfad (3, 4) und/oder an der Zusammenführung des ersten und zweiten Wasserpfades (3, 4) angeordneten Durchflussregler (9, 9',9"),
• mindestens einem im ersten und/oder zweiten und/oder dritten Wasserpfad (3, 4, 6) angeordneten Durchflussmesser (10,10',10") und
• mindestens eine Steuereinheit (17) zur Einstellung des Mischungsverhältnisses des Wassers im dritten Wasserpfad (6).

2. Getränkebereiter nach Anspruch 1,
**dadurch gekennzeichnet, dass** die Filtereinheit (7) zur Wasserenthärtung mindestens eine Filterkartusche enthält oder hieraus besteht, wobei die Filterkartusche bevorzugt Aktivkohle, einen Anionentauscher, einen Kationentauscher, einen Umkehrosmosefilter oder Kombinationen hiervon und ggf. eine Mineralstoffquelle zur Freisetzung von Mineralstoffen im Wasser enthält.

3. Getränkebereiter nach einem der Ansprüche 1 oder 2,
**dadurch gekennzeichnet, dass** die Filtereinheit (7) keine Mischeinrichtung zur Vermischung von gefiltertem Wasser mit unbehandeltem Wasser aufweist.

4. Getränkebereiter nach einem der Ansprüche 1 bis 3,
**dadurch gekennzeichnet**, das der Getränkebereiter mindestens eine Fördereinheit zum Fördern des Wassers, insbesondere eine Pumpe, enthält.

5. Getränkebereiter nach einem der Ansprüche 1 bis 4,
**dadurch gekennzeichnet, dass** die mindestens eine Heizeinrichtung (8) ausgewählt ist aus der Gruppe bestehend aus einem Heißwasserkessel (8'), einem Dampfkessel (8" ), mindestens einem Durchlauferhitzer (8"') und Kombinationen hiervon.

6. Getränkebereiter nach einem der Ansprüche 1 bis 5,
**dadurch gekennzeichnet, dass** der mindestens eine Durchflussregler (9, 9') ein Ventil, bevorzugt eine Proportionalventil, und/oder eine regelbare Blende ist.

7. Getränkebereiter nach einem der Ansprüche 1 bis 6,
**dadurch gekennzeichnet, dass** der mindestens eine Durchflussmesser (10, 10', 10") ein berührungsloser Durchflussmesser, bevorzugt ein Flügelrad-Durchflussmesser, ein Ultraschall-Durchflussmesser oder ein magnetisch-induktiver Durchflussmesser ist.

8. Getränkebereiter nach einem der Ansprüche 1 bis 7,
**dadurch gekennzeichnet, dass** im ersten und/oder zweiten und/oder dritten Wasserpfad (3, 4, 6) mindestens eine Leitwertmesseinheit (11, 11', 11"), insbesondere ein Leitwertsensor angeordnet ist, wobei die mindestens eine Leitwertmesseinheit (11,11', 11") bevorzugt stromaufwärts von dem mindestens einen Durchflussregler (9, 9', 9") angeordnet ist.

9. Getränkebereiter nach einem der Ansprüche 1 bis 8,
**dadurch gekennzeichnet, dass** die mindestens eine Heizeinheit (8) über mindestens einen weiteren Wasserpfad mit mindestens einer weiteren Einheit ausgewählt aus der Gruppe bestehend aus einer Milchschäumeinheit (12), einer Brüheinheit (13) zum Brühen von Kaffee, eine Mischeinheit (14) zum Mischen von Wasser mit einem Feststoff oder Getränkekonzentrat, bevorzugt Kakao-, Milch- oder Suppenpulver, oder Kombinationen hiervon verbunden ist.

10. Getränkebereiter nach Anspruch 9,
**dadurch gekennzeichnet, dass** die Steuereinheit (17) das Mischungsverhältnis in Abhängigkeit von der angesteuerten weiteren Einheit regelt.

11. Getränkebereiter nach einem der Ansprüche 1 bis 10,
**dadurch gekennzeichnet, dass** vom Wasserpfad (4) ein Bypass (4') abzweigt, der eine unmittelbare Verbindung mit mindestens einer der weiteren Einheiten ausgewählt aus der Gruppe bestehend aus Milchschäumeinheit (12), Brüheinheit (13) und Mischeinheit (14) ermöglicht und/oder dass vom Wasserpfad (3) über einen Bypass (3') eine Verbindung über die Heizeinrichtung (8', 8") zu der mindestens einer der weiteren Einheiten ausgewählt aus der Gruppe bestehend aus Milchschäumeinheit (12), Brüheinheit (13) und Mischeinheit (14) besteht.

12. Getränkebereiter nach einem der Ansprüche 1 bis 11,
**dadurch gekennzeichnet, dass** der Getränkebereiter eine elektrisch betriebene Kaffeemaschine ist.

13. Verfahren zur Einstellung variierender Wasserhärten in einem Getränkebereiter, bei dem
• ein Wasserzulauf (2) mit dem Trinkwassernetz oder einem Wassertank verbunden wird,
• vom Wasserzulauf (2) in den Getränkebereiter (1) ein erster Wasserpfad (3) verläuft,
• vom ersten Wasserpfad (3) ein zweiter Wasserpfad (4) abgezweigt wird, wobei das Wasser aus dem ersten Wasserpfad (3) und das Wasser aus dem zweiten Wasserpfad über eine Zusammenführung (5) in einen dritten Wasserpfad (6) zur Vermischung des Wassers überführt werden,
• über mindestens eine im ersten Wasserpfad (3) angeordnete Filtereinheit (7) das Wasser im ersten Wasserpfad (3) enthärtet wird,
• mindestens eine Heizeinrichtung (8, 8') zum Erhitzen von Wasser im dritten Wasserpfad (6) angeordnet wird,
• mit mindestens einem im ersten und/oder zweiten Wasserpfad (3, 4) angeordneten Durchflussregler (9, 9', 9") die Durchflussmenge an Wasser im ersten und/oder zweiten Wasserpfad (3, 4) eingestellt wird,
• mit mindestens einem im ersten und/oder zweiten und/oder dritten Wasserpfad (3,4,6) angeordneten Durchflussmesser (10,10',10") der Durchfluss im ersten und/oder zweiten und/oder dritten Wasserpfad (3,4,6) bestimmt wird und
• mit mindestens einer Steuereinheit (17) das Mischungsverhältnis des Wassers im dritten Wasserpfad eingestellt wird.

14. Verfahren nach Anspruch 12,
**dadurch gekennzeichnet, dass** ein Getränkebereiter nach einem der Ansprüche 1 bis 11 eingesetzt wird.

15. Verwendung eines Getränkebereiters nach einem der Ansprüche 1 bis 11 zur Einstellung variierender Wasserhärten bei der Zubereitung von Getränken und der Reinigung des Getränkebereiters.

## Claims

1. A beverage maker (1) comprising
• a water inlet (2) that is connectable to the drinking water network or a water tank,
• a first water path (3) running from the water inlet (2) into the beverage maker (1),
• a second water path (4) branching off from the first water path (3), the water from the first water path (3) and the water from the second water path being able to be transferred via a junction (5) into a third water path (6) for mixing the water,
• at least one filter unit (7) for water softening arranged in the first water path (3),
• at least one heating device (8, 8') for heating water arranged in the third water path (6),
• at least one flow regulator (9, 9', 9") arranged in the first and/or second water path (3, 4) and/or at the junction of the first and second water path (3, 4),
• at least one flow meter (10, 10', 10") arranged in the first and/or second and/or third water path (3, 4, 6) and
• at least one control unit (17) for setting the mixing ratio of the water in the third water path (6).

2. The beverage maker according to claim 1,
**characterized in that** the filter unit (7) for water softening comprises or consists of at least one filter cartridge, wherein the filter cartridge preferably comprises activated carbon, an anion exchanger, a cation exchanger, a reverse osmosis filter or combinations thereof and optionally a mineral source for releasing minerals into water.

3. The beverage maker according to any one of claims 1 or 2,
**characterized in that** the filter unit (7) has no mixing device for mixing filtered water with untreated water.

4. The beverage maker according to any one of claims 1 to 3,
**characterized in that** the beverage maker comprises at least one conveying unit for conveying the water, in particular a pump.

5. The beverage maker according to any one of claims 1 to 4,
**characterized in that** the at least one heating device (8) is selected from the group consisting of a hot water boiler (8'), a steam boiler (8"), at least one flow heater (8"') and combinations thereof.

6. The beverage maker according to any one of claims 1 to 5,
**characterized in that** the at least one flow regulator (9, 9') is a valve, preferably a proportional valve, and/or is an adjustable orifice.

7. The beverage maker according to any one of claims 1 to 6,
**characterized in that** the at least one flow meter (10, 10', 10") is a non-contact flow meter, preferably an impeller flow meter, an ultrasonic flow meter or a magneto-inductive flow meter.

8. The beverage maker according to any one of claims 1 to 7,
**characterized in that** at least one conductivity measuring unit (11, 11', 11"), in particular a conductivity sensor, is arranged in the first and/or second and/or third water path (3, 4, 6), wherein the at least one conductivity measuring unit (11, 11', 11") is preferably arranged upstream of the at least one flow regulator (9, 9', 9").

9. The beverage maker according to any one of claims 1 to 8,
**characterized in that** the at least one heating unit (8) is connected via at least one further water path to at least one further unit selected from the group consisting of a milk foaming unit (12), a brewing unit (13) for brewing coffee, a mixing unit (14) for mixing water with a solid or beverage concentrate, preferably cocoa, milk or soup powder, or combinations thereof.

10. The beverage maker according to claim 9,
**characterized in that** the control unit (17) regulates the mixing ratio in dependence of the controlled further unit.

11. The beverage maker according to any one of claims 1 to 10,
**characterized in that** a bypass (4') branches off from the water path (4), the bypass allowing a direct connection to at least one of the further units selected from the group consisting of milk foaming unit (12), brewing unit (13) and mixing unit (14) and/or that, from the water path (3), via a bypass (3'), there is a connection via the heating device (8', 8") to at least one of the further units selected from the group consisting of milk foaming unit (12), brewing unit (13) and mixing unit (14).

12. The beverage maker according to any one of claims 1 to 11,
**characterized in that** the beverage maker is an electrically operated coffee machine.

13. A method for setting varying water hardness levels in a beverage maker, in which
• a water inlet (2) is connected to the drinking water network or a water tank,
• a first water path (3) runs from the water inlet (2) into the beverage maker (1),
• a second water path (4) is branched off from the first water path (3), the water from the first water path (3) and the water from the second water path being transferred via a junction (5) into a third water path (6) for mixing the water,
• the water in the first water path (3) is softened via at least one filter unit (7) arranged in the first water path (3),
• at least one heating device (8, 8') for heating water is arranged in the third water path (6),
• the flow rate of water in the first and/or second water path (3, 4) is set using at least one flow regulator (9, 9', 9") arranged in the first and/or second water path (3, 4),
• the flow in the first and/or second and/or third water path (3, 4, 6) is determined by means of at least one flow meter (10,10', 10") arranged in the first and/or second and/or third water path (3, 4, 6), and
• the mixing ratio of the water in the third water path is set by means of at least one control unit (17).

14. The method according to claim 12,
**characterized in that** a beverage maker according to any one of claims 1 to 11 is utilized.

15. A use of a beverage maker according to any one of claims 1 to 11 for setting varying water hardness values when preparing beverages and cleaning the beverage maker.

## Revendications

1. Dispositif de préparation de boissons (1) contenant
• une alimentation en eau (2) pouvant être reliée avec le réseau d'eau potable ou un réservoir d'eau,
• un premier circuit d'eau (3) s'étendant de l'alimentation en eau (2) vers le dispositif de préparation de boissons (1),
• un deuxième circuit d'eau (4) en dérivation par rapport au premier circuit d'eau (3), où l'eau provenant du premier circuit d'eau (3) et l'eau provenant du deuxième circuit d'eau peuvent être transférées par le biais d'une jonction (5) dans un troisième circuit d'eau (6) pour le mélange de l'eau,
• au moins une unité de filtration (7) disposée dans le premier circuit d'eau (3) pour l'adoucissement de l'eau,
• au moins un dispositif de chauffage (8, 8') pour le chauffage de l'eau, qui est disposé dans le troisième circuit d'eau (6),
• au moins un régulateur du débit (9, 9', 9") disposé dans le premier, et/ou le deuxième circuit d'eau (3, 4) et/ou sur la jonction du premier et du deuxième circuit d'eau (3, 4),
• au moins un débitmètre (10, 10', 10") disposé dans le premier, et/ou le deuxième, et/ou le troisième circuit d'eau (3, 4, 6), et
• au moins une unité de commande (17) pour le réglage des rapports de mélange de l'eau dans le troisième circuit d'eau (6).

2. Dispositif de préparation de boissons selon la revendication 1,
**caractérisé en ce que** l'unité de filtration (7) pour l'adoucissement de l'eau contient au moins une cartouche de filtration ou en est constituée, où la cartouche de filtration contient de préférence du charbon actif, un échangeur d'anions, un échangeur de cations, un filtre d'osmose inverse ou une combinaison de ceux-ci et, éventuellement, une source de produits minéraux pour la libération de substances minérales dans l'eau.

3. Dispositif de préparation de boissons selon l'une des revendications 1 ou 2,
**caractérisé en ce que** l'unité de filtration (7) ne présente pas de dispositif de mélange permettant le mélange d'eau filtrée avec de l'eau non traitée.

4. Dispositif de préparation de boissons selon l'une des revendications 1 à 3,
**caractérisé en ce que** le dispositif de préparation de boissons contient au moins une unité de transport pour le transport de l'eau, notamment une pompe.

5. Dispositif de préparation de boissons selon l'une des revendications 1 à 4,
**caractérisé en ce que** le ou les dispositifs de chauffage (8) est choisi ou sont choisis dans le groupe constitué d'un réservoir d'eau chaude (8'), d'une chaudière à vapeur (8"), d'au moins un chauffe-eau (8"') et de combinaisons de ceux-ci.

6. Dispositif de préparation de boissons selon l'une des revendications 1 à 5,
**caractérisé en ce que** le ou les régulateurs de débit (9, 9') est ou sont une vanne, de préférence, une vanne proportionnelle, et/ou une ouverture réglable.

7. Dispositif de préparation de boissons selon l'une des revendications 1 à 6,
**caractérisé en ce que** le ou les débitmètres (10, 10', 10") est ou sont un débitmètre sans contact, de préférence un débitmètre à turbine, un débitmètre ultrasonore ou un débitmètre à induction magnétique.

8. Dispositif de préparation de boissons selon l'une des revendications 1 à 7,
**caractérisé en ce qu'**au moins une unité de mesure conductimétrique (11, 11', 11"), notamment un capteur conductimétrique est disposé dans le premier, et/ou le deuxième, et/ou le troisième circuit d'eau (3, 4, 6), où l'unité ou les unités de mesure conductimétrique (11, 11', 11") est ou sont de préférence disposées en amont par rapport au ou aux régulateurs de débit (9, 9', 9").

9. Dispositif de préparation de boissons selon l'une des revendications 1 à 8,
**caractérisé en ce que** l'unité ou les unités de chauffage (8) est reliée ou sont reliées, par le biais d'au moins un nouveau circuit d'eau, avec au moins une nouvelle unité choisie dans le groupe constitué d'une unité de moussage de lait (12), une unité de préparation (13) pour la préparation de café, une unité de lait (14) pour le mélange d'eau avec un solide ou un concentré de boisson, de préférence, de la poudre de cacao, de lait ou de potage, ou des combinaisons de celles-ci.

10. Dispositif de préparation de boissons selon la revendication 9,
**caractérisé en ce que** l'unité de commande (17) règle le rapport de mélange en fonction de la nouvelle unité démarrée.

11. Dispositif de préparation de boissons selon l'une des revendications 1 à 10,
**caractérisé en ce qu'**un bypass (4') est en dérivation par rapport au circuit d'eau (4), qui permet une liaison immédiate avec au moins une des nouvelles unités choisies dans le groupe constitué d'une unité de moussage de lait (12), une unité de préparation (13) pour la préparation de café, une unité de lait (14), et/ou qu'il y a une liaison partant du circuit d'eau (3), passant par un bypass (3'), par le dispositif de chauffage (8', 8") vers au moins une des nouvelles unités choisies dans le groupe constitué d'une unité de moussage de lait (12), une unité de préparation (13) pour la préparation de café, une unité de lait (14).

12. Dispositif de préparation de boissons selon l'une des revendications 1 à 11,
**caractérisé en ce que** le dispositif de préparation de boissons est une machine à café à alimentation électrique.

13. Procédé de réglage de duretés d'eau variables dans un dispositif de préparation de boissons, chez lequel
• une alimentation en eau (2) est reliée avec un réseau d'eau potable ou un réservoir d'eau,
• un premier circuit d'eau (3) s'étend de l'alimentation en eau (2) vers le dispositif de préparation de boissons (1),
• un deuxième circuit d'eau (4), est mis en dérivation par rapport au premier circuit d'eau (3), où l'eau provenant du premier circuit d'eau (3) et l'eau provenant du deuxième circuit d'eau peuvent être transférées par le biais d'une jonction (5) dans un troisième circuit d'eau (6) pour le mélange de l'eau,
• l'eau dans le premier circuit d'eau (3) est adoucie par au moins une unité de filtration (7) disposée dans le premier circuit d'eau (3),
• au moins un dispositif de chauffage (8, 8') pour le chauffage de l'eau est disposé dans le troisième circuit d'eau (6),
• le débit en eau dans le premier et/ou dans le deuxième circuit d'eau (3, 4) est réglé avec au moins un régulateur du débit (9, 9', 9") disposé dans le premier, et/ou dans le deuxième circuit d'eau (3, 4),
• le débit dans le premier et/ou le deuxième, et/ou le troisième circuit d'au (3, 4, 6) est déterminé avec au moins un débitmètre (10, 10', 10") disposé dans le premier, et/ou le deuxième et/ou le troisième circuit d'eau (3, 4, 6), et
• le rapport des mélanges dans le troisième circuit d'eau est réglé avec au moins une unité de commande (17).

14. Procédé selon la revendication 12,
**caractérisé en ce qu'**un dispositif de préparation de boissons selon l'une des revendications 1 à 11 est employé.

15. Utilisation d'un dispositif de préparation de boissons selon l'une des revendications 1 à 11 pour le réglage de duretés d'eau variables lors de la préparation de boissons et du nettoyage du dispositif de préparation de boissons.
